Europäisches Patentamt

European Patent Office

Office européen des brevets

(11) Veröffentlichungsnummer: **0 315 272**
**A2**

# (12) EUROPÄISCHE PATENTANMELDUNG

(21) Anmeldenummer: 88202439.1

(22) Anmeldetag: 01.11.88

(51) Int. Cl.4: **F21V 8/00 , F21Q 3/00**

(30) Priorität: 05.11.87 DE 3737514

(43) Veröffentlichungstag der Anmeldung:
**10.05.89 Patentblatt 89/19**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT**

(72) Erfinder: **Schrammek, Manfred, Dr.-Ing.**
**Friedhofstrasse 42**
**D-6349 Greifenstein-Beilstein(DE)**
Erfinder: **Sprengart, Matthias**
**Wetzlarer Strasse 92**
**D-6330 Wetzlar-Nauborn(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**D-2000 Hamburg 1(DE)**

(54) Lichtleitkörper für Frontblenden elektrischer Geräte.

(57) Die Erfindung bezieht sich auf einen Lichtleitkörper für Frontblenden elektrischer Geräte zum von innen heraus Beleuchten von Funktionskomplexen und/oder Bedienungselementen, wie Tastenknöpfen, Wippen, Stellhebeln oder dergl., bestehend aus einem hinter den zu beleuchtenden Teilen angeordneten Körper aus glasklarem Werkstoff, durch den Lichtstrahlen von wenigstens einer Beleuchtungsquelle her zu den zu beleuchtenden Stellen hindurchlaufen und durch Umlenkung an Reflexionsflächen zu den einzelnen zu beleuchtenden Stellen ausgeblendet werden, wobei der Lichtleitkörper (1) aus einer Platte (1) mit im wesentlichen planer Oberfläche besteht, wobei sich quer durch die Platte (1) Durchbrüche (7, 8, 9) erstrecken, deren senkrecht zur Plattenmittelebene (5) und unter einem spitzen Winkel zum Lichtstrahlenverlauf verlaufende Wände (7a, 8a, 9a) Reflexionsflächen aufweisen, mittels der die Lichtstrahlen parallel zur Plattenmittelebene (5) innerhalb der Platte weitergeleitet werden, und wobei die Lichtstrahlen in als Ausblendstellen vorgesehene Ausnehmungen hinein reflektiert und aus diesen mittels zur Plattenmittelebene (5) geneigter Reflexionsflächen (10b) ausgeblendet werden.

FIG.1

## Lichtleitkörper für Frontblenden elektrischer Geräte

Die Erfindung bezieht sich auf einen Lichtleitkörper für Frontblenden elektrischer Geräte zum von innen heraus Beleuchten von Funktionskomplexen und/oder Bedienungselementen, wie Tastenknöpfen, Wippen, Stellhebeln oder dergl., bestehend aus einem hinter den zu beleuchtenden Teilen angeordneten Körper aus glasklarem Werkstoff, durch den Lichtstrahlen von wenigstens einer Be-leuchtungsquelle her durch Totalreflexionen inner-halb des Lichtleitkörpers zu den zu beleuchtenden Stellen geleitet werden und durch Umlenkung an Reflexionsflächen zu den einzelnen zu beleuchtenden Stellen geleitet werden.

Derartige Lichtleitkörper sind in elektrischen Geräten, insbesondere Autoradios, allgemein üblich, da mit ihrer Hilfe zur Beleuchtung dienendes Licht von relativ weit entfernten Lichtquellen zu einzelnen zu beleuchtenden Stellen geleitet werden kann. Derartige Lichtleitkörper sind im allgemeinen recht kompliziert aufgebaut, entweder indem einzelne Lichtleitbahnen speziell ausgeformt sind oder komplexe dreidimensionale Oberflächengestaltungen zum Einsatz kommen.

Kleine elektrische Geräte, insbesondere Autoradios, bedingen einen sehr gedrungenen Aufbau mit möglichst wenig Teilen. Dabei ist es von Vorteil, wenn einzelne Teile möglichst mehreren Be-triebsfunktionen zugeordnet werden können. Sol-che wären beispielsweise Betriebsfunktionen für das Führen von Drucktasten in Eindrückrichtung.

Es ist Aufgabe der Erfindung, einen Lichtleitkörper der eingangs erwähnten Art zu schaffen, der mehrere Betriebsfunktionen übernehmen kann und in Tiefenrichtung des Gerätes möglichst flach ist.

Die gestellte Aufgabe ist erfindungsgemäß dadurch gelöst, daß
-der Lichtleitkörper aus einer Platte mit im wesentlichen planer Oberfläche besteht,
-sich quer durch die Platte Durchbrüche erstrek-ken, deren senkrecht zur Plattenmittelebene und unter einem spitzen Winkel zum Lichtstrahlenverlauf verlaufende Wände als Reflexionsflächen ausgebildet sind, mittels der die Lichtstrahlen parallel zur Plattenmittelebene innerhalb der Platte weitergeleitet werden,
-die Lichtstrahlen in als Ausblendstellen vorgese-ne Ausnehmungen hineingeleitet und aus diesen mittels zur Plattenmittelebene geneigter Reflexionsflächen ausgeblendet werden.

Durch die Ausbildung in Form einer Platte wird in Tiefenrichtung des Gerätes von dem Lichtleitkörper nur eine kleine Bautiefe benötigt. Alle Lichtstrahlen bleiben in dieser Platte und werden zunächst jeweils an den Wänden der Durchbrüche durch Reflexion weitergeleitet, wobei sie in der Platte verbleiben. Erst wenn die Lichtstrahlen auf eine geneigte Reflexionsfläche im Bereich einer als Ausblendstelle vorgesehenen Ausnehmung auftreffen, werden sie im allgemeinen etwa senkrecht aus der Platte ausgeblendet und zu der gewünschten zu beleuchtenden Stelle geführt. Infolge dieser Ausbildung als Platte kann der Lichtleiter hinter der Frontblende eine relativ große Fläche einnehmen. Die Lichtstrahlen können dementsprechend weit bis in Randbereiche ausgestrahlt und dort für Von-hinten-Beleuchtungszwecke eingesetzt werden.

Nach einer weiteren Ausgestaltung der Erfindung ist vorgesehen, daß die Reflexionsflächen insbesondere an den Durchbrüchen parabelförmig ausgebildet sind. Diese Ausbildung ermöglicht es,
a) den Richtungswechsel durch einfache Prismen zu bewirken und
b)die Leuchtdichte des ausgesandten Strahlenbündels auch auf längeren Distanzen konstant zu halten.

Die Übertragungsverluste werden so über längere Wege minimiert.

An den Ausblendstellen kann die Platte nach einer weiteren Ausgestaltung der Erfindung so gestaltet sein, daß die Reflexionsflächen in den Ausnehmungen in Kunststoffspritztechnik gebildet sind. Die Lichtstrahlen lassen sich damit durch die geneigten Reflexionsflächen nach vorn zu einer zu beleuchtenden Stelle umlenken, auch wenn Bedienungs elemente mit Reflexionsflächen an bestimmten Stellen nicht vorgesehen sind.

Wenn die Lichtleitplatte bereits bis unter die einzelnen Tastenknöpfe, Wippen, Hebel oder dergl. geführt ist, dann lassen sich die Ausnehmungen nach einer weiteren Ausgestaltung der Erfindung so gestalten, daß die gegenseitigen Brechungsflächen in den Stößeln der in den Ausnehmungen geführten Bedienungselemente vorgesehen sind. Derartige Führungen können dann in anderen bisher eingesetzten, die Führungen enthaltenden Bauelemente entfallen.

Nach einer weiteren Ausgestaltung der Erfindung ist vorgesehen, daß die Durchbrüche zum Umlenken der Lichtstrahlen innerhalb der Platte die Form von Dreiecken aufweisen. Derartige Dreiecke entstehen durch das Zusammenfallen von zwei beispielsweise parabelförmigen Reflexionsflächen. Die Dreiecksform ist spritztechnisch zweckmäßig.

Die Erfindung wird anhand der Zeichnung näher erläutert. Es zeigen:

Fig. 1 eine Lichtleitplatte mit den der Lichtreflexion dienenden, senkrecht zur Plattenmittelebene verlaufenden Durchbrüchen in schaubildlicher Darstellung,

Fig. 2 die Platte nach Fig. 1 mit einer in eine zentrale Öffnung eingesetzten Glühlampe und von dieser ausgehenden Einzel-Lichtstrahlen, die durch Reflexion zu von innen heraus zu beleuchtenden Bauteilen führen,

Fig. 3 die Lichtleitplatte in Draufsicht, wobei in der unteren Hälfte nur wenige Lichtstrahlen, wie in Fig. 2, eingezeichnet sind, während die oberen Hälfte mehr Strahlen zeigt und Bündelungen deutlicher erkennen läßt,

Fig. 4 in vergrößerter Darstellung eine Ausnehmung zur Tastenführung und Lichtausblendung mit geneigter Reflexionsfläche im Schnitt,

Fig. 5 in vergrößerter Darstellung eine Ausnehmung, in der ein Stößel eines Bedienungselementes geführt ist, mit einer Reflexionsfläche im Stößel.

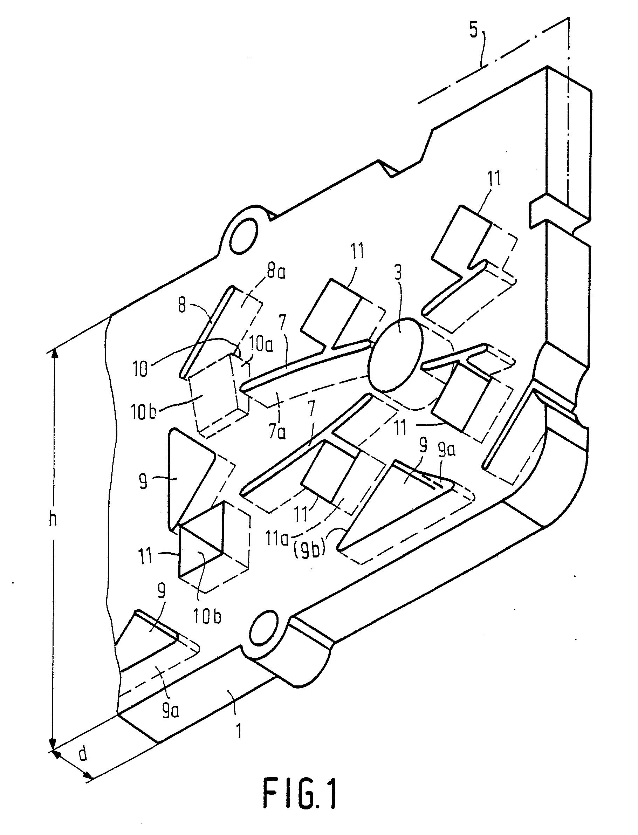

Eine in Fig. 1 dargestellte Lichtleitplatte 1 aus glasklarem Werkstoff mit ebener Ober- und Unterseite ist vorgesehen, um hinter der Frontblende eines Autoradios angeordnet zu werden. Sowohl die Höhe h als auch die Dicke d der Lichtleitplatte ist so bemessen, daß der Lichtleitkörper in die Frontblende eines Autoradios integriert werden kann.

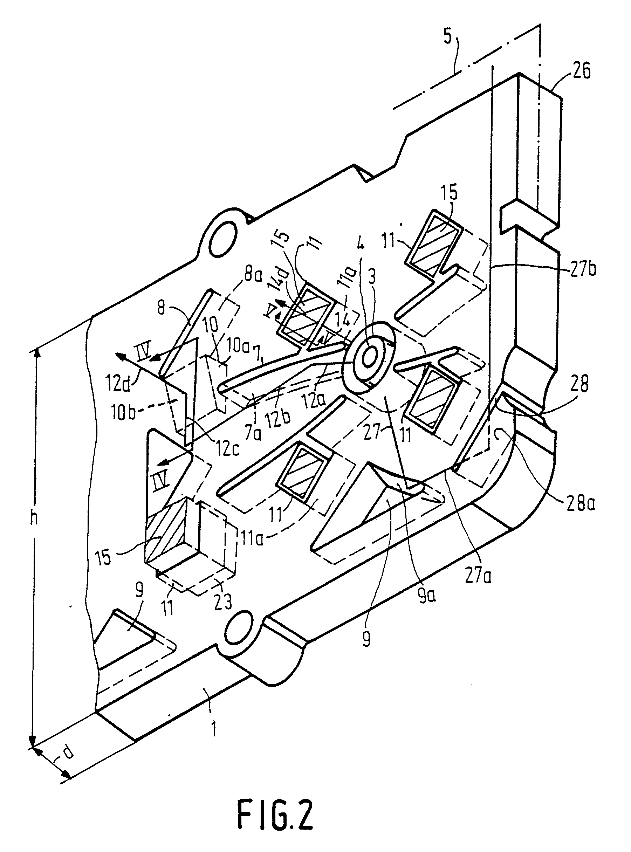

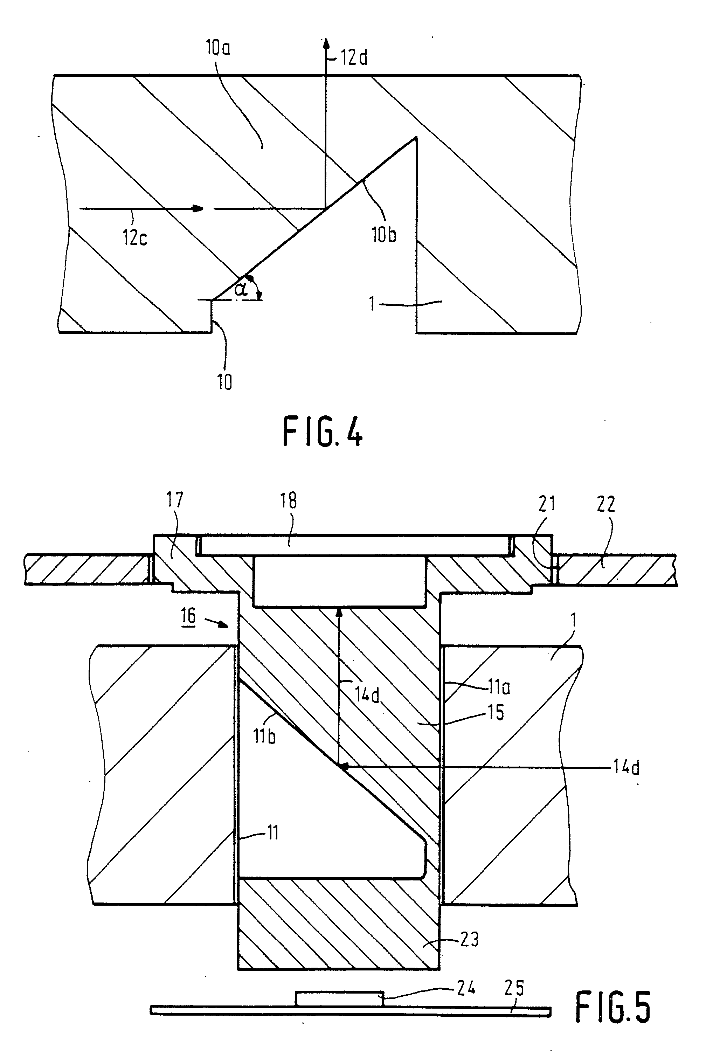

In der Lichtleitplatte 1 ist ein zentraler Durchbruch 3 vorgesehen, in den, wie Fig. 2 zeigt, eine Glühlampe 4 einsetzbar ist. In der Platte 1 sind senkrecht zur Plattenmittelebene 5 Schlitze oder dreieckförmige Durchbrüche 7, 8, 9 vorgesehen, deren beispielsweise parabelförmige Wände 7a, 8a, 9a als Reflexionsflächen senkrecht zur Plattenmittelebene 5 verlaufen. Die Formgebung der Durchbrüche 7, 8, 9 ist beliebig. Es muß nur dafür gesorgt sein, daß die Lichtstrahlen an den Reflexionsflächen, dies sind die Grenzflächen zwischen Plattenmaterial und Luft, total reflektiert werden. Es sind weitere, vorzugsweise rechteckige oder quadratische Ausnehmungen 10, 11 vorgesehen, durch deren Wände 10a, 11a die Lichtstrahlen nicht durch Schräg-Einfall reflektiert, sondern durch Senkrecht-Einfall hindurch in die Ausnehmungen hineingehen. Die Ausnehmungen 10 sind dabei derart gestaltet, daß in ihnen geneigt zur Mittelebene 5 verlaufende Flächen 10b das durch die Fläche 10a hindurchgehende Licht senkrecht zu zu beleuchtenden Geräteteilen, wie Randflächen, Teilflächen oder dergl., ausblenden (Fig. 4).

In den Ausnehmungen 11, in die das Licht durch die Wände 11a hineinstrahlt, werden Stößel 15 mittels der Wände 11a geführt. Die Stößel 15 führen an der Gerätefrontseite Bedienungselemente 17, wie Knöpfe, Wippen, oder dergl. (Fig. 5).

Fig. 2 zeigt nun Einzel-Strahlengänge, die von der Glühlampe 4 ausgehen und zu den Ausnehmungen 10 und 11 hin geführt werden. Betrachtet man einen als Stahlenbeispiel ausgewählten Lichtstrahl 12, dann wird dieser als Strahl 12a an einer Wandfläche 7a des schlitzförmigen Durchbruches 7 reflektiert und ist dann der Strahlteil 12b. Die Wandfläche 7a schließt, um die Reflexion zu ermöglichen, mit dem Strahl 12a einen spitzen Winkel ein. Eine Wand 13a eines Durchbruches 13 reflektiert den Strahlteil 12b im weiteren Verlauf als Strahlteil 12c in den Bereich 10 der Ausnehmung 10 hinein. Eine zugehörige, geneigt zu der Mittelebene 5 angeordnete Reflexionsfläche 10b reflektiert den Strahl senkrecht aus der Platte 1 als Strahlteil 12d herausbricht. Die Herausreflektier-Richtung ist durch die Pfeildarstellung am Ende des Strahlteiles 12d angedeutet. Der Neigungswinkel Alpha der Reflexionsfläche 10b beträgt 45° zur Mittelebene 5.

Eine Schnittdarstellung der Ausnehmung 10 ist in Fig. 4 anhand eines Schnittes IV-IV in Fig. 2 vergrößert wiedergegeben. Man erkennt im Schnitt die Lage der Reflexionsfläche 10b. Gelangt der Lichtstrahl 12c in einen Bereich 10a der Ausnehmung 10 mit der Reflexionsfläche 10b, dann reflektiert die Reflexionsfläche den Lichtstrahl 12c als Lichtstrahl 12d. Dieser Lichtstrahl 12d wird zu einem zu beleuchtenden Teil aus der Platte 1 ausgekoppelt.

Ein anderer, als Strahlbeispiel ausgewählter Strahl 14 aus Fig. 2 dringt beispielsweise unmittelbar senkrecht in eine Wand 11a einer Ausnehmung 11 hinein und kann dort gleichzeitig unmittelbar in den Stößel 15 einer in Fig. 5 dargestellten Taste 16 eindringen (Fig. 5). An einer Reflexionsfläche 11b im Stößel 15, die geneigt zur Lichtleitplatte 1 verläuft, wird der Strahl 14 als Strahlteil 14d nach oben in den zugehörigen Tastenknopf 17 hin gekoppelt.

Fig. 5 zeigt den Aufbau der Ausblendung über Ausnehmung 11 und Stößel 15 deutlicher in vergrößerter Darstellung anhand eines Schnittes V-V nach Fig. 2. Der Lichtstrahl 14 wird durch eine Wand 11a der Ausnehmung 11, die er senkrecht trifft, hindurch auf die geneigte Reflexionsfläche 11b geleitet, die in dem Stößel 15 vorgesehen ist. An dieser wird der Lichtstrahl 14 reflektiert und als Lichtstrahlteil 11d längs des lichtleitenden Stößels 15 zum Tastenknopf 17 geleitet, in dem eine zu beleuchtende Markierungsplatte 18 angeordnet ist. Der Knopf 17 sitzt beispielsweise in einer Öffnung 21 einer Frontblende 22 eines Autoradios. Der Fuß 23 der Taste kann mit einem vereinfacht dargestellten Druckschalter 24 an einer Schaltungsplatte 25 zusammenwirken.

Die Ausnehmungen 11 sind so ausgebildet, daß deren Wände 11a die Stößel 15 der Bauelemente führen, die aus der Frontblende herausragen. Die Lichtleitplatte selbst ist damit zugleich eine Führungsplatte für Bauelemente. Weitere Führungsmaßnahmen anderer Art können dadurch eingespart werden.

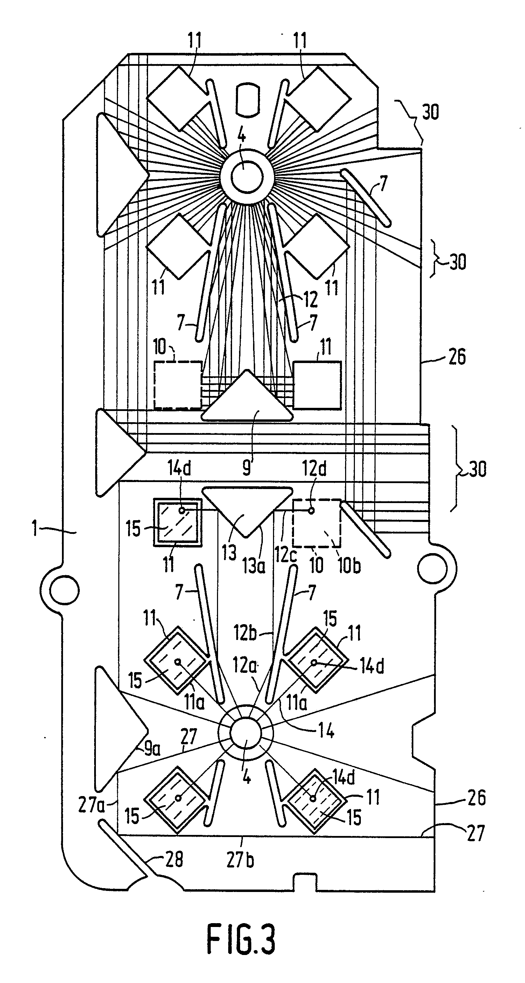

Wie die Fig. 2 und 3 zeigen, wird ein Teil der Lichtstrahlen über die Schmalseitenflächen 26 ausgeblendet. Ein solcher Lichtstrahl 27 wird beispielsweise an einer Wand 9a eines der Durchbrüche 9 in einen Strahlteil 27a an einer Wand 28a eines Schlitzes 28 als Strahlteil 27b zur Schmalseitenfläche 26 gelenkt. Die Wände 9a und 28a schließen mit den Strahlteilen 27, 27a, 27b wieder spitze Winkel ein.

Damit ist es möglich, durch zielgerichtete Auskopplung von Lichtstrahlen aus dem Lichtleitkörper in allen Raumrichtungen Zierteile, wie z. B. Lichtstege, beleuchtete Kassettenklappen, oder andere Bedienungselemente, wie z. B. Laufwerkstasten, zu beleuchten, ohne daß zusätzliche Lichtquellen vorgesehen werden müssen und ohne daß die Platte eine Höhenprofilierung aufweist.

## Ansprüche

1. Lichtleitkörper für Frontblenden elektrischer Geräte zum von innen heraus Beleuchten von Funktionskomplexen und/oder Bedienungselementen, wie Tastenknöpfen, Wippen, Stellhebeln oder dergl., bestehend aus einem hinter den zu beleuchtenden Teilen angeordneten Körper aus glasklarem Werkstoff, durch den Lichtstrahlen von wenigstens einer Beleuchtungsquelle her durch Totalreflexionen innerhalb des Lichtleitkörpers zu den zu beleuchtenden Stellen hindurchlaufen und durch Umlenkung an Reflexionsflächen zu den einzelnen zu beleuchtenden Stellen geleitet werden, dadurch gekennzeichnet, daß
-der Lichtleitkörper (1) aus einer Platte (1) mit im wesentlichen planer Oberfläche besteht,
-sich quer durch die Platte (1) Durchbrüche (7, 8, 9) erstrecken, deren senkrecht zur Plattenmittelebene (5) und unter einem spitzen Winkel zum Lichtstrahlenverlauf verlaufende Wände (7a, 8a, 9a) als Reflexionsflächen ausgebildet sind, mittels der die Lichtstrahlen parallel zur Plattenmittelebene (5) innerhalb der Platte weitergeleitet werden,
-die Lichtstrahlen in als Ausblendstellen vorgesehene Ausnehmungen hinein reflektiert und aus diesen mittels zur Plattenmittelebene (5) geneigter Reflexionssflächen (10b) ausgeblendet werden.

2. Lichtleitkörper nach Anspruch 1, dadurch gekennzeichnet, daß die Reflexionsflächen (7a, 9a) insbesondere an den Durchbrüchen (7, 9) parabelförmig ausgebildet sind.

3. Lichtleitkörper nach Anspruch 1 oder 2, dadurch gekennzeichnet, daß die geneigten Reflexionsflächen (10b) in den Stößeln der in den Ausnehmungen (10) geführten Bedienungselemente vorgesehen sind.

4. Lichtleitkörper nach Anspruch 1, dadurch gekennzeichnet, daß der Körper mit integrierten Reflexionsflächen (19b) in den Ausnehmungen (11) in Kunststoffspritz- oder Schneidtechnik gefertigt wird.

5. Lichtleitkörper nach einem der Ansprüche 1 bis 4, dadurch .gekennzeichnet, daß die Durchbrüche (7, 8, 9) zum Längsleiten der Lichtstrahlen innerhalb der Platte die Form von Schlitzen aufweisen.

6. Lichtleitkörper nach einem der Ansprüche 1 bis 5, dadurch gekennzeichnet, daß die Durchbrüche (7, 8, 9) zum Umlenken der Lichtstrahlen innerhalb der Platte die Form von Dreiecken aufweisen.

7. Lichtleitkörper nach einem der Ansprüche 1 bis 6, dadurch gekennzeichnet, daß die Ausnehmungen (11) zum Führen der Stößel (15) in der Platte (1) die Form von Rechtecken oder Quadraten aufweisen.

8. Lichtleitkörper nach einem der Ansprüche 1 bis 7, dadurch gekennzeichnet, daß die Reflexionsflächen (10b, 11b) mit der Mittelebene (5) der Platte einen Winkel Alpha von ca. 45° einschließen.

FIG.1

FIG.2

FIG.3

FIG. 4

FIG. 5

4-Ⅳ-PHD 87-229